(19) Europäisches Patentamt
European Patent Office
Office européen des brevets

(11) **EP 3 870 379 B1**

(12) **EUROPEAN PATENT SPECIFICATION**

(45) Date of publication and mention
of the grant of the patent:
**14.05.2025 Bulletin 2025/20**

(21) Application number: **19875931.8**

(22) Date of filing: **07.10.2019**

(51) International Patent Classification (IPC):
**B22C 3/00** *(2006.01)*     **C09D 129/14** *(2006.01)*
**C09D 1/00** *(2006.01)*

(52) Cooperative Patent Classification (CPC):
(C-Sets available)
**C09D 1/00; B22C 3/00; C09D 129/14**     (Cont.)

(86) International application number:
**PCT/TR2019/050836**

(87) International publication number:
**WO 2020/086040 (30.04.2020 Gazette 2020/18)**

(54) **A COATING FOR CASTING MOULDS AND CORES AND A PRODUCTION METHOD FOR THE COATING**

BESCHICHTUNG ZUM GIESSEN VON FORMEN UND KERNEN UND
HERSTELLUNGSVERFAHREN FÜR DIE BESCHICHTUNG

REVÊTEMENT POUR MOULES ET NOYAUX DE COULAGE ET PROCÉDÉ DE PRODUCTION DE
CE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2018 TR 201815893**

(43) Date of publication of application:
**01.09.2021 Bulletin 2021/35**

(73) Proprietor: **Cukurova Kimya Endustrisi A.S.**
**45030 Manisa (TR)**

(72) Inventors:
• **CETIN, Haydar**
  **45030 Manisa (TR)**
• **AKSENER, Ahmet Eymen**
  **45030 Manisa (TR)**
• **AKSIN ARTOK, Ozge**
  **45030 Manisa (TR)**
• **HATIP, Gokhan**
  **45030 Manisa (TR)**

(74) Representative: **Cayli, Hülya**
**Paragon Consultancy Incorporated**
**Koza Sokak No: 63/2 GOP**
**Cankaya**
**06540 Ankara (TR)**

(56) References cited:
**CN-A- 1 666 828       CN-A- 101 497 105
CN-A- 106 424 538     CN-A- 108 237 200
CN-B- 103 551 498     CN-B- 104 209 455
US-A1- 2010 224 755**

EP 3 870 379 B1

(52) Cooperative Patent Classification (CPC): (Cont.)

C-Sets
**C09D 129/14, C08K 3/22**

## Description

## Technical Field

The present invention relates to a coating coated on casting moulds and cores used for metal casting processes, and a production method for the coating.

## Background of the Invention

Along with forming processes which are machining, forging, welding, pressing while forming metals, another method is casting. Metal casting is described as a process of melting the metal or alloy selected, casting it to a mould cavity which is the negative of the desired form, and waiting it to harden in order to achieve a desired shape. Casting of a part is performed by casting the molten metal into a mould having a cavity at desired geometry and hardening the metal therein. After hardening, the part takes the shape of the mould, and volume of the part is slightly reduced with respect to the mould cavity. The casting process varies according to the technique used. Some of the applications that vary according to the technique used are sand casting, permanent mould casting, die casting, precision casting, Styrofoam model casting (lost foam) and continuous casting. In the sand casting, which is one of these applications, molten metal is cast into a mould prepared from sand, and a two-piece casting mould is prepared by compressing the sand around a model.

In the casting industry, sand moulds and cores into which molten metal is cast are coated with coatings, which contain refractory material, in order to be able to obtain a cleaner and smooth casting which is free of technical problems. According to the casting to be made, importance of the refractor selected is seen at the end of the casting. Not all refractory materials are suitable for all kinds of casting. Refractory casting coatings are basically divided into two as water-based and solvent-based coatings depending on the carrier liquids. Casting coatings which are vital in the casting industry enable casting quality to be increased and part machining costs to be decreased after the casting.

In the casting industry, when a molten/liquid metal is filled into a mould, thermal, mechanical and physicochemical phenomena occur at the surface. As a result of such phenomena occurring at the surface, metal-mould reactions, reactions on the mould surface and metal-mould reactions occur. Realization possibility of a chemical reaction is based on free energy exchange of the system. This energy is Gibbs Free Energy ($\Delta$G) and is defined as:

$$\Delta G = \Delta H - T \Delta S$$

Gibbs Free Energy is calculated by a combination of enthalpy (H), temperature (T) and entropy (S), i.e.

three different state functions. Change in free energy of the system measures a balance between two driving forces that determine whether the reaction is spontaneous.

$\Delta$G0 < 0 $\rightarrow$ Reaction is spontaneous.

$\Delta$G0 = 0 $\rightarrow$ System is in equilibrium.

$\Delta$G0 > 0 $\rightarrow$ Reaction does not occur.

When the evaluation of said metal surface reactions is made in this context, an intermediate layer should be implemented to prevent possible reactions between the mould material and the molten metal, wherein the intermediate layer can increase Gibbs free energy and thus minimize entropy change depending on the temperature. The easiest way to implement this is using coatings for casting and core. Possible reactions between the mould material and the molten metal are the main casting defects that are common in the casting industry, wherein problems as metal penetration, mould/metal interactions/gas defects and sintering of sand-coating-metal mixture to the casting surface occur as a result of such reactions. For said gas defects, in case a serious gas emission occurs, the gas penetrates into the molten metal and the resulting gas bubbles lead to gas defects called as pin holes.

An exemplary coating containing refractory material is disclosed in CN101497105B. In this document, a water-based casting coating is detailed, wherein the water-based casting coating contains a refractory material, a suspending agent, a binding agent, a surfactant and preservatives. In the formulation of said coating material it is stated that the refractor can be selected as corundum, and the suspending agent can be selected as aluminium silicate which is an inorganic gel. Moreover, the process comprises the steps of: adding the suspension agent directly to the water and mixing the mixture in a high speed dispersion machine and distributing the same; adding auxiliary agents which comprise an antifoaming agent, a surfactant, a corrosion remover and the like, and mixing the auxiliary agents; adding the refractory powder to the mixture to be mixed; and adding the binder to the mixture to be mixed and adding water until the coating reaches a required thickness/density. Another example is disclosed in US2857285A. Refractory coatings containing aluminium silicate which are disclosed in this document are water-based and comprise sodium silicate and potassium silicate. These coatings are suitable for use at temperatures up to 1500°C. Another exemplary coating containing refractory material is disclosed in CN101817058A. Said document refers to a shield type coating and zircon is used as the refractory material. However, in these documents, only water or liquid mixtures containing high amounts of water are used as carrier liquid. CN108237200A discloses a sand mould coating with solvent as the liquid carrier. The composition comprises refractory materials with defined particle sizes.

## Brief Description of the Invention

With the present invention, there is developed a coating which is especially suitable for being coated on sand moulds and/or cores used for iron and steel casting processes, and a production method for the coating. The coating comprises at least one carrier liquid; at least one refractory material in the form of a powder; at least one rheology agent; and at least one suspension agent. The production method comprises the steps of: placing at least one carrier liquid and at least one rheology agent to a mixer; operating the mixer at a high speed to allow rheology agent to be dispersed homogenously in the mixer; and adding at least one refractory material in the form of a powder to the mixer.

Cores and moulds used in the casting industry emit too much gas during a casting process. While a very large surface is provided for the moulds so as to direct the gases outwards which move freely during the casting operation, core prints having a very small section are provided at the cores. These core prints correspond to the resting surfaces of the cores on the model. Since the coating according to the present invention is able to be used for both small and large casting parts regardless of geometry of the casting part, a high strength is provided on the resting surfaces of the cores coated with the coating according to the present invention. Cores and moulds having high strength prevent gas defects forming at the casting such that freely moving gas is removed out of the mould. With the present invention there is developed a coating which can increase Gibbs free energy and thus minimize entropy change depending on the temperature so as to form an intermediate layer between the materials used in casting industry, such as moulds and cores, and the liquid metal.

## Object of the Invention

An object of the present invention is to develop a coating which is coated on casting moulds and cores used for metal casting processes, and a production method for the coating.

Another object of the present invention is to develop a coating which is coated on moulds and/or cores used for iron and steel casting processes.

A further object of the present invention is to develop a coating which decreases capillary dimensions of a lower layer.

Another object of the present invention is to develop a coating for improving smoothness of the casting surface by changing surface tension of the lower surface of the coating.

Yet another object of the present invention is to develop a coating for minimizing metal penetration defects at the lower surface of the coating.

## Description of the Invention

In the metal casting processes, sand castings and cores into which molten metal is cast are coatinged in order to be able to obtain a cleaner and smooth casting which is free of technical problems. This term referred to as coating is a metallurgical process implemented for the surface processes to increase lifetime of a main material generally by protecting the material and achieve a smooth surface or appearance. Nature of a coating can vary according to the metal to be cast. Therefore, with the present invention there is developed a coating which is especially suitable for being coated on sand moulds and/or cores used for iron and steel casting processes.

The coating according to the present invention comprises at least one carrier liquid, at least one refractory material in the form of a powder wherein said refractory material has a particle size of 75 to 150 $\mu$m; at least one rheology agent, and at least one suspension agent, wherein the refractory material comprises corundum within the range of 15% to 45% by weight with respect to the total weight of the coating, and alumina silicate within the range of 13-43% by weight with respect to the total weight of the coating.

The carrier liquid mentioned here is the main component since it makes other components a suspension and/or a solution. Said carrier liquid should be selected as a volatile liquid which can completely evaporate under circumstances of metal casting.

The production method of the coating according to the present invention comprises the steps of: placing at least one carrier liquid and at least one rheology agent to a mixer; operating the mixer at a high speed to allow rheology agent to be dispersed homogenously in the mixer; and adding at least one refractory material in the form of a powder to the mixer wherein the refractory material comprises corundum within the range of 15% to 45% by weight with respect to the total weight of the coating, and alumina silicate within the range of 13-43% by weight with respect to the total weight of the coating.

The method further comprises the step of adding at least one colorant, at least one surface agent, and at least one binding agent into the mixture.

In a preferred embodiment of the invention, the carrier liquid has a boiling point of less than 115°C, preferably less than 95°C under normal pressure (under a pressure of 1 atm).

In an embodiment of the invention, the carrier liquid is selected from a group consisting of at least one alcohol, at least one volatile organic component and/or a mixture thereof. The at least one volatile organic component and/or at least one alcohol is selected to have a boiling point of less than 115°C, preferably less than 95°C. Here, the carrier liquid is preferably selected from a group consisting of alcohols, ethanol, methanol, isopropanol and/or combinations thereof that have 1 to 3 carbon atoms. Ratio of the carrier liquid weight to the total coating weight is selected within the range of 37% to 75%, preferably 50% to 70%. Here, the carrier liquid is preferably used in an anhydrous form.

Particle size of the refractory material is crucial in order for the coating according to the present invention to be in a steady state, to be suitable for use in applications with spraying, brush and/or washing equipment, and to be dispersed homogenously to the application surface. Accordingly, the refractory material is selected to have a particle size within the range of 75 to 150 μm. The refractory material mentioned herein is selected to have a minimum porosity and reduce physicochemical reaction between the casting and the intermediate surface of the molten metal.

According to the invention, the refractory material can be selected as a mixture of corundum and alumina silicate; or as a mixture containing natural minerals and having a high corundum and alumina silicate percentage. The refractory material has a higher melting point than a casting temperature of the molten metal and/or does not undergo a physicochemical reaction with the molten metal. In the refractory material comprising a mixture of corundum and alumina silicate, mass ratio of the refractory material in a mixture has been adjusted specifically by experimental studies, and the most suitable and effective mass composition ratio has been determined. Ratio of the weight of corundum refractory material to the total coating weight is within the range of 15% to 45%. Ratio of weight of alumina silicate refractory material to the total coating weight is within the range of 13% to 43%.

In another embodiment of the present invention, the coating preferably comprises a binding agent. Binding agents, after the coating implemented to the casting mould is dried, bind the content of the coating and enable the coating to adhere safely to the ground.

In another embodiment of the present invention, binding agents are preferably selected among cured binding agents. Through use of cured binding agents, a coating is achieved which has a high abrasion resistance. By this means, after the casting mould is prepared and coated with the coating according to the present invention, the coating is prevented from being corroded due to mechanical effects and spilling out of the mould or the core during transportation and enclosing operations. The binding agents are preferably selected from a group consisting of natural glass resins (cold box and/or hot box resins) and PVB which can be dissolved in alcohols. Ratio of the binder weight to the total coating weight is within the range of 0.1% to 5%, preferably 0.5% to 2% in order for the coating according to the present invention to be adhered safely to the ground. Cores and moulds used in the casting industry are generally obtained from resin bonded mixtures. Therefore, when natural binding agents are used as the binding agent, cores and moulds have a high binding and strength properties. Thanks to the coating according to the present invention, a coating is formed which has a high resistance against thermal shocks, wherein high protection is provided for the surfaces that the molten metal primarily contacts during the casting process. By this way, once the metal in the environment starts to cool, refractory coating is prevented from shrinking.

In an alternative embodiment of the invention, the coating comprises at least one filler agent mixed with the rheology agent. Here, the mixture of rheology agent and the filler agent increases the viscosity of the coating. Thus, heavy components in the coating are prevented from being embedded on one hand, and the coating layer is enabled to comprise an equal compound at each point during implementation. In addition, the mixture of the rheology agent and the filler agent enables that the coating does not flow any further after it is implemented to the surface of the casting mould, and that an equal coating thickness is achieved at the vertical surfaces of the casting mould, as well. The mixture of the rheology agent and the filler agent preferably comprises silicates such as treated and modified attapulgite and organic clay. Here, ratio of weight of the mixture of rheology agent and filler agent to the total coating weight is within the range of 0.25% to 3.75%, more specifically 1.0% to 2.0%.

The coating of the present invention further comprises surface diffusing agents and antifoaming agents. Here, the surface diffusing agent preferably comprises a melamine formaldehyde based material. Ratio of the surface diffusing agent weight to the total coating weight is preferably within the range of 0.05% to 0.3%.

In another embodiment of the invention, the coating is ready-to-use in white-cream colour, while it may be red, green, yellow or dark grey when it contains metal oxides. In other words, the coating may contain colorants as metal oxide.

Viscosity of the coating according to the present invention is 11 to 25 s, in particular preferably 11 to 13 s which is determined according to DIN-4 cup. The coating has a value within the range of 1 to 2.2 g/cm$^3$ (0 - 120 °Be), preferably 1.18 to 1.35 g/cm$^3$ (30 to 45 °Be) by means of Baume buoyancy method.

Cores and moulds used in the casting industry emit too much gas during a casting process. While a very large surface is provided for the moulds so as to direct the gases outwards which move freely during the casting operation, core prints having a very small section are provided at the cores. These core prints correspond to the resting surfaces of the cores on the model. Since the coating according to the present invention is able to be used both for small and large casting parts regardless of geometry of the casting part, a high strength is provided on the resting surfaces of the cores coated with the coating according to the present invention. Cores and moulds having high strength prevent gas defects to be formed at the casting such that gas, which moves freely, is removed out of the mould. With the present invention there is developed a coating which can increase Gibbs free energy and thus minimize entropy change depending on the temperature so as to form an intermediate layer between the materials used in casting industry, such as moulds and cores, and the liquid metal.

**Claims**

1. A coating which is especially suitable for being coated on sand moulds and/or cores used for iron and steel casting processes comprising at least one carrier liquid; at least one refractory material in the form of a powder wherein said refractory material has a particle size of 75 to 150μm; at least one rheology agent; and at least one suspension agent **characterized in that** the refractory material comprises corundum within the range of 15% to 45% by weight with respect to the total weight of the coating, and alumina silicate within the range of 13-43% by weight with respect to the total weight of the coating.

2. A coating according to claim 1, **characterized in that** the carrier liquid has a boiling point of less than 115°C under normal pressure.

3. A coating according to claim 1, **characterized in that** the carrier liquid is selected from a group consisting of volatile organic components, alcohols having a boiling point of less than 115°C and/or a mixture thereof.

4. A coating according to claim 1, **characterized in that** ratio of the carrier liquid weight to the total coating weight is within the range of 37% to 75%.

5. A coating according to claim 1, **characterized by** comprising surface diffusing agents, binding agents, antifoaming agents and/or derivatives thereof.

6. A coating according to claim 5, **characterized in that** the binding agent is selected from a group consisting of PVB, natural glass resin, agents which can dissolve in alcohols and/or a mixture thereof.

7. A coating according to claim 5, **characterized in that** ratio of the binding agent weight to the total coating weight is within the range of 0.1% to 5%.

8. A coating according to claim 1, **characterized by** comprising at least one filler agent which is mixed with the rheology agent.

9. A coating according to claim 9, **characterized in that** ratio of weight of the mixture of rheology agent and filler agent to the total coating weight is within the range of 0.25% to 3.75%.

10. A coating according to claim 5, **characterized in that** the surface diffusing agent comprises a melamine formaldehyde based material.

11. A coating according to claim 5, **characterized in that** ratio of the surface diffusing agent weight to the total coating weight is within the range of 0.01% to 1%.

12. A production method for a coating according to any of the preceding claims, **characterized by** comprising the steps of: placing at least one carrier liquid and at least one rheology agent to a mixer; operating the mixer at a high speed to allow rheology agent to be dispersed homogenously in the mixer; and adding at least one refractory material in the form of a powder to the mixer wherein the refractory material comprises corundum within the range of 15% to 45% by weight with respect to the total weight of the coating, and alumina silicate within the range of 13-43% by weight with respect to the total weight of the coating.

13. A production method according to claim 12, **characterized by** comprising the step of adding at least one colorant, at least one surface agent, and at least one binding agent into the mixture following the step of adding the refractory material in the form of a powder to the mixer.

**Patentansprüche**

1. Beschichtung, die als Beschichtung auf Sandformen und/oder Kernen besonders geeignet ist, die in Eisen- und Stahlgussprozessen verwendet werden, wobei die Beschichtung wenigstens eine Trägerflüssigkeit, wenigstens ein feuerfestes Material in Form eines Pulvers, wobei das feuerfeste Material eine Teilchengröße von 75 bis 150 μm hat, wenigstens ein Rheologiemittel und wenigstens ein Suspensionsmittel aufweist, **dadurch gekennzeichnet, dass** das feuerfeste Material Korund im Bereich von 15 Gew.% bis 45 Gew.% in Bezug auf das Gesamtgewicht der Beschichtung und Aluminiumsilikat im Bereich von 13 - 43 Gew.% in Bezug auf das Gesamtgewicht der Beschichtung aufweist.

2. Beschichtung nach Anspruch 1, **dadurch gekennzeichnet, dass** die Trägerflüssigkeit einen Siedepunkt von weniger als 115°C unter Normaldruck hat.

3. Beschichtung nach Anspruch 1, **dadurch gekennzeichnet, dass** die Trägerflüssigkeit ausgewählt ist aus einer Gruppe bestehend aus flüchtigen organischen Bestandteilen, Alkohole mit einem Siedepunkt von weniger als 115°C und/oder einem Gemisch daraus.

4. Beschichtung nach Anspruch 1, **dadurch gekennzeichnet, dass** das Verhältnis des Gewichts der Trägerflüssigkeit zum Gesamtgewicht der Beschichtung innerhalb des Bereichs von 37% bis 75% liegt.

**5.** Beschichtung nach Anspruch 1, **dadurch gekennzeichnet, dass** sie Oberflächendiffusionsmittel, Bindemittel, Antischaummittel und/oder Derivate davon aufweist.

**6.** Beschichtung nach Anspruch 5, **dadurch gekennzeichnet, dass** das Bindemittel ausgewählt ist aus einer Gruppe bestehend aus PVB, natürliches Glasharz, Mitteln, die in Alkoholen lösbar sind, und/oder einem Gemisch daraus.

**7.** Beschichtung nach Anspruch 5, **dadurch gekennzeichnet, dass** das Verhältnis von Bindemittelgewicht zum Gesamtgewicht der Beschichtung innerhalb des Bereichs von 0,1% bis 5% liegt.

**8.** Beschichtung nach Anspruch 1, **dadurch gekennzeichnet, dass** sie wenigstens einen Füllstoff aufweist, der mit dem Rheologiemittel vermischt ist.

**9.** Beschichtung nach Anspruch 8, **dadurch gekennzeichnet, dass** das Verhältnis des Gewichts des Gemisches aus Rheologiemittel und Füllstoff zum Gesamtgewicht der Beschichtung innerhalb des Bereichs von 0,25% bis 3,75% liegt.

**10.** Beschichtung nach Anspruch 5, **dadurch gekennzeichnet, dass** das Oberflächendiffusionsmittel ein auf Melamin-Formaldehyd basierendes Material aufweist.

**11.** Beschichtung nach Anspruch 5, **dadurch gekennzeichnet, dass** das Verhältnis des Gewichts des Oberflächendiffusionsmittels zum Gesamtgewicht der Beschichtung innerhalb des Bereichs von 0,01% bis 1% liegt.

**12.** Herstellungsverfahren für eine Beschichtung nach einem der vorhergehenden Ansprüche, **dadurch gekennzeichnet, dass** das Verfahren die Schritte aufweist: Einbringen von wenigstens einer Trägerflüssigkeit und wenigstens einem Rheologiemittel in einen Mischer, Betreiben des Mischers mit hoher Geschwindigkeit, um zu ermöglichen, dass das Rheologiemittel im Mischer homogen dispergiert wird, und Hinzufügen von wenigstens einem feuerfesten Material in Form eines Pulvers in den Mischer, wobei das feuerfeste Material Korund im Bereich von 15 Gew.% bis 45 Gew.% bezogen auf das Gesamtgewicht der Beschichtung und Aluminiumsilikat im Bereich von 13 Gew.% - 43 Gew.% bezogen auf das Gesamtgewicht der Beschichtung aufweist.

**13.** Herstellungsverfahren nach Anspruch 12, **dadurch gekennzeichnet, dass** das Verfahren den Schritt des Hinzufügens von wenigstens einem Farbstoff, wenigstens eines oberflächenaktiven Mittels, und wenigstens eines Bindemittels in das Gemisch folgend auf den Schritt des Hinzufügens des feuerfesten Materials in Form eines Pulvers in den Mischer umfasst.

**Revendications**

**1.** Revêtement particulièrement adapté pour être appliqué sur des moules en sable et/ou des noyaux utilisés dans les processus de coulée de fer et d'acier, comprenant au moins un liquide porteur ; au moins un matériau réfractaire sous forme de poudre dans lequel ledit matériau réfractaire a une taille de particule de 75 à 150 $\mu$m ; au moins un agent rhéologique ; et au moins un agent de suspension **caractérisé en ce que** le matériau réfractaire comprend du corindon compris entre 15% et 45% en poids par rapport au poids total ; et du silicate d'alumine compris entre 13 et 43% en poids par rapport au poids total du revêtement.

**2.** Revêtement selon la revendication 1, **caractérisé en ce que** le liquide porteur a un point d'ébullition inférieur à 115°C sous pression normale.

**3.** Revêtement selon la revendication 1, **caractérisé en ce que** le liquide porteur est choisi dans un groupe constitué de composants organiques volatils, d'alcools ayant un point d'ébullition inférieur à 115°C et/ou d'un mélange de ceux-ci.

**4.** Revêtement selon la revendication 1, **caractérisé en ce que** le rapport entre le poids du liquide porteur et le poids total du revêtement est compris entre 37 % et 75 %.

**5.** Revêtement selon la revendication 1, **caractérisé en ce qu'**il comprend des agents de diffusion de surface, des agents liants, des agents antimousse et/ou des dérivés de ceux-ci.

**6.** Revêtement selon la revendication 5, **caractérisé en ce que** l'agent liant est choisi dans un groupe constitué de PVB, de résine de verre naturelle, d'agents pouvant se dissoudre dans des alcools et/ou un mélange de ceux-ci.

**7.** Revêtement selon la revendication 5, **caractérisé en ce que** le rapport entre le poids du liant et le poids total du revêtement est compris entre 0,1 % et 5 %.

**8.** Revêtement selon la revendication 1, **caractérisé par** la présence d'au moins un agent de remplissage mélangé à l'agent rhéologique.

**9.** Revêtement selon la revendication 9, **caractérisé en ce que** le rapport en poids du mélange d'agent rhéologique et d'agent de remplissage par rapport au poids total du revêtement est compris entre 0,25 % et 3,75 %.

10. Revêtement selon la revendication 5, **caractérisé en ce que** l'agent de diffusion de surface comprend un matériau à base de mélamine formaldéhyde.

11. Revêtement selon la revendication 5, **caractérisé en ce que** le rapport entre le poids de l'agent de diffusion de surface et le poids total du revêtement est compris entre 0,01 % et 1 %.

12. Procédé de fabrication d'un revêtement selon l'une quelconque des revendications précédentes, **caractérisé en ce qu'**il comprend les étapes suivantes :
placer au moins un liquide porteur et au moins un agent rhéologique dans un mélangeur ; faire fonctionner le mélangeur à une vitesse élevée pour permettre à l'agent rhéologique d'être dispersé de manière homogène dans le mélangeur ; et ajouter au moins un matériau réfractaire sous forme de poudre dans le mélangeur, dans lequel le matériau réfractaire comprend du corindon compris entre 15% et 45% en poids par rapport au poids total du revêtement, et du silicate d'alumine dans une fourchette de 13 à 43% en poids par rapport au poids total du revêtement.

13. Procédé de fabrication selon la revendication 12, **caractérisé en ce qu'**il comprend l'étape consistant à ajouter au moins un colorant, au moins un agent de surface et au moins un agent liant dans le mélange après l'étape consistant à ajouter le matériau réfractaire sous forme de poudre dans le mélangeur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101497105 B
- US 2857285 A
- CN 101817058 A
- CN 108237200 A